# EUROPEAN PATENT APPLICATION

(11) **EP 2 728 127 A2**
(43) Date of publication of application: **07.05.2014**
(21) Application number: 13189282.0
(22) Date of filing: 18.10.2013
(51) Int. Cl.: F01D 17/10, F02C 9/28

(54) **Systems and methods for moving actuators in a power generation unit**

(30) Priority: 31.10.2012 US 201213665121
(71) Applicant: General Electric Company, Schenectady, New York 12345 (US)
(72) Inventor: Seely, William Forrester, Greenville, SC South Carolina 29605 (US); Boes, Laura, Greenville, SC South Carolina 29605 (US); Ewens, David, Greenville, SC South Carolina 29605 (US)
(74) Representative: Picker, Madeline Margaret

(57) **Abstract**

Systems and methods for providing stepping actuations in a power generation unit 104 are disclosed. Certain embodiments herein may relate to manipulating actuators to produce a desired output in a power generation unit 104 without disrupting production by the power generation output, such as megawatt and/or steam production. A model may be generated 110 that includes one or more inputs and associated outputs in a power generation unit 104. The model may be leveraged to determine an actuator to adjust to create a desired output, as well as one or more different actuators to adjust to offset an otherwise negative impact on power generation unit 104 production while maintaining the desired output.

## Description

Embodiments of the disclosure relate generally to power generation equipment and, more particularly, to systems and methods for moving actuators in a power generation unit.

An actuator may control a mechanism in a power generation unit or asset, such as turbine or generator. A benefit of moving an actuator may be to determine useful information about the system that the actuator may be controlling. Moving actuators, however, may have adverse effects on power generation outputs, such as steam production and generator megawatts, which may be undesirable to power service providers, for example, who may be committed to provide a certain megawatt output to consumers that may be disrupted by moving actuators. Some power generation units or systems, such as closed-loop systems, may prevent such adverse effects by automatically moving an actuator back to its previous, stable position to prevent adverse effects that may result from moving actuators. Because of the adverse effects and controls against moving actuators, many features of moving actuators may not be realized.

Some or all of the above needs and/or problems may be addressed by certain embodiments of the disclosure. Certain embodiments may include systems and methods for controlling actuators to produce desired results without impacting the operation of a power generation asset. According to one embodiment, there is disclosed a system including at least one memory that stores computer-executable instructions and at least one processor configured to access the at least one memory and execute the computer-executable instructions to determine an actuator of a unit to adjust, determine a desired output of the unit, and determine at least one action to perform on the unit based at least in part on an output model for the unit. The at least one processor may be further configured to control the unit by manipulating the actuator of the unit determined to be adjusted and performing the at least one determined action on the unit while maintaining the desired output.

According to another embodiment, there is disclosed a method for determining an actuator of a unit to adjust, determining a desired output of the unit, and determining at least one action to perform on the unit based at least in part on an output model for the unit. The method may further include controlling the unit by manipulating the actuator of the unit determined to be adjusted and performing the at least one determined action on the unit while maintaining the desired output.

According to a further embodiment, there is disclosed one or more computer-readable media storing computer-executable instructions that, when executed by at least one processor, configure the at least one processor to perform operations comprising generating an input/output model for a turbine unit based at least in part on at least one input and at least one output of turbine unit. The at least one processor may also be configured to determine an actuator of the turbine to adjust and determining at least one action to perform on the turbine unit based at least in part on the input/output model. The at least one processor may be further configured to control the turbine unit by manipulating the actuator of the turbine unit determined to be adjusted for a predetermined time, performing the at least one determined action on the turbine unit for the predetermined time while maintaining a desired output of the turbine unit, and maintaining the control of the turbine unit while the turbine unit operates under other control for the predetermined time period.

Other embodiments, systems, methods, apparatuses, aspects, and features of the disclosure will become apparent to those skilled in the art from the following detailed description, the accompanying drawings, and the appended claims.

The detailed description is set forth with reference to the accompanying drawings, which are not necessarily drawn to scale. The use of the same reference numbers in different figures indicates similar or identical items, in accordance with an embodiment of the disclosure.
FIG. 1 illustrates a schematic diagram of an example process for moving actuators in a power generation unit, according to one embodiment of the disclosure.
FIG. 2 illustrates an example computing environment for moving actuators in a power generation unit, according to one embodiment of the disclosure.
FIG. 3 illustrates an example flow diagram for a method according to one embodiment of the disclosure.

Illustrative embodiments of the disclosure relate to, among other things, moving actuators in a unit, such as a power generation unit. As used herein, an actuator may refer to a type of motor for moving or controlling a mechanism or unit, such as a power generation unit. An example type of movement of an actuator may include stepping an actuator. Stroking or stepping an actuator may refer to the process of moving the actuator to cause a certain output in a power generation unit associated with moving the actuator. Each actuator may have a unique impact on each output of a power generation unit. By moving multiple actuators, a net-zero impact on some outputs may be attained while a non-zero impact on other outputs may be attained. In this way, actuators may be moved together to test various components or functionality of a power generation unit (e.g., such as steam production or megawatt output associated with stepping fuel flow and/or exhaust temperature) without causing disruption or adverse impacts to the normal operation of the power generation unit.

To accomplish such testing of power generation functionality without disrupting normal operation, certain embodiments herein may include a multiple-input, multiple-output model of the power generation unit to be modified via moving actuators. Such a model may identify relationships between actuators in a power generation unit and their associated outputs. The relationships may be based on existing knowledge regarding how actuators and other components in a power generation connect and interoperate together. By leveraging such relationships in the model, outputs associated with moving actuators (i.e., inputs) may in effect be offset by moving certain other actuators (e.g., as identified in the model) such that adverse impacts on certain power generation unit outputs may not be realized. In one embodiment, the model may include magnitude and dynamics data for each input-output pair. For example, a model may indicate that stepping actuator A by approximately 10% (input A) would produce a desired effect of stepping fuel flow into a power generation unit to determine the result on exhaust temperature (output A), but such action may cause an approximate 5% increase in megawatts (output B), which may be invasive to a user of the power generation unit associated with the stepping. Another actuator, actuator C, may be stepped by approximately 4% (input C) to cancel out the 5% increase in megawatts (output C), thereby eliminating the invasiveness of stepping actuator A while allowing the effect of stepping actuator A, i.e., controlling the amount of fuel flow entering a power generation unit, to occur. In this way, a model may include many relationships between inputs and outputs of various actuators and may be leveraged in practice to afford testing of power generation units, as well as other non-invasive manipulation of power generation units, among other benefits described below.

The technical effects of certain embodiments herein may include various benefits that may result from moving actuators in an operational power generation unit, such as, but not limited to, utilization of valves with re-lubrication needs, monitoring of dynamic response of internal variables (e.g., a megawatt output associated with moving certain actuators), an ability to compare engine response in a power generation unit associated with moving actuators to historical data for condition monitoring and to known degradation curves for fault prediction, parts life monitoring, and parts life monitoring and other system dynamics characterizations.

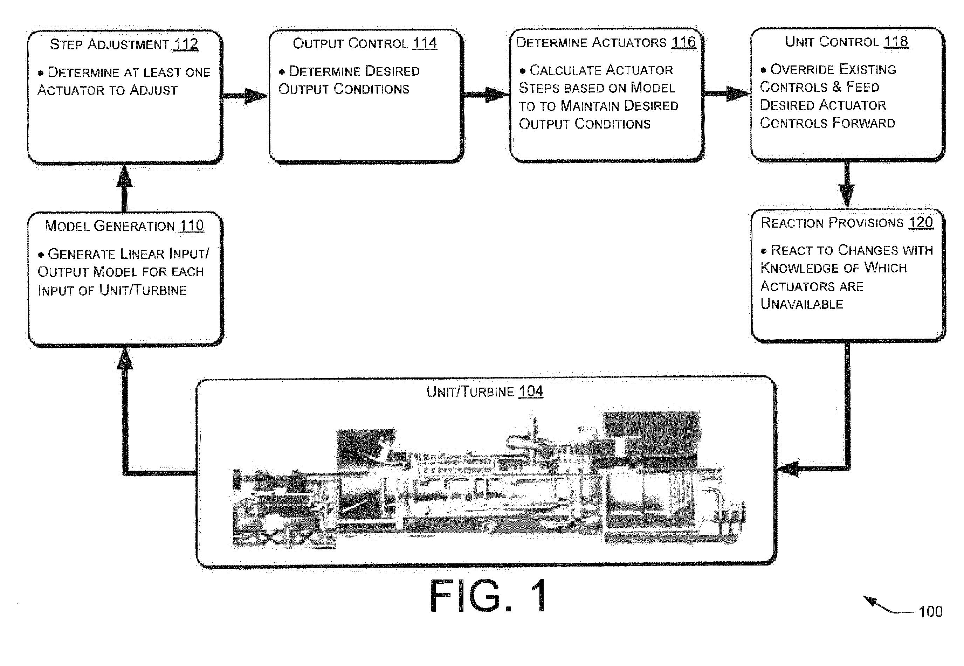

FIG. 1 depicts a schematic diagram of an example process for adjusting actuators in a power generation unit, according to one embodiment of the disclosure. Adjusting an actuator may include a step adjustment, in one aspect of an embodiment. In the embodiment in FIG. 1, a gas turbine 104 is shown. As described, various actuators associated with the power generation unit may be moved to produce a desired effect without adversely impacting the operation of the power generation unit. In other words, non-invasive movements of actuators may be performed. FIG. 1 illustrates various processes that may be associated non-invasive movements of actuators associated with a power generation unit. Such processes may include model generation at block 110, step adjustment at block 112, output control at block 114, determination of actions at block 116, power generation unit control at block 118, and reaction provisions at block 120.

A specific example may include moving electronic gas control valves to re-lubricate a ball stem that, if not re-lubricated properly, may become damaged and fail. Model generation at block 110 may include generating a linear input/output model for each input of a power generation unit. According to the present example, a model may include moving various electronic gas control valves (inputs) and their associated outputs (e.g., impacts on steam production and generator megawatts) associated with such inputs. In this way, each input (e.g., percentage movement of an actuator), may have one or more corresponding outputs that may be indicated in the model for each electronic gas control valve. For example, a model may indicate that moving one electronic gas control valve ("valve A") by approximately 1/2% may move megawatts up approximately 5%. The model may further indicate that moving a second electronic gas control valve ("valve B") by approximately 1/4% may move megawatts down approximately 5%, and therefore may effectively offset an approximate 1/2% percent movement of valve A. An approximate 1/4% movement of valve B may sufficiently offset a 1/2% movement of valve A, according to one example, because valve B may have a different (e.g., larger) volume and/or size and may therefore require less movement to offset an output associated with moving another actuator, e.g., valve A. Thus, size, volume, dimensions, and/or other characteristics of actuators may be used to determine a model for moving actuators.

In certain embodiments, an output model may include at least one of a lookup table, a state-space transfer functions, or a Kalman filter. Certain output modules may also include an instruction that at least one output be impacted while at least one other output not be impacted. Numerous other example models may exist in other embodiments. Such models may include different types and numbers of actuators, different percentage movements, resulting outputs, etc.

Process block 112 may include determining at least one actuator to adjust. At least one actuator to adjust may be identified based on a relationship, e.g., as identified in a generated model, between such actuators and a desired output. In the present example of moving electronic gas control valves to re-lubricate a ball stem, it may be determined that inputs associated with one or more electronic gas control valves may have an impact on outputs associated with re-lubricating a ball stem. Such electronic gas control valves, e.g., valve A and valve B in the present example, may therefore be identified as actuators to adjust for re-lubricating the ball stem.

Process block 114 may include determining a desired output condition associated with moving one or more actuators. In the present example, such a desired output may be to re-lubricate a ball stem. By moving an actuator identified for adjustment (e.g., valve A) by approximately 1/2%, the ball stem may be sufficiently re-lubricated. Process block 116 may address adverse impacts associated with moving actuators to attain a desired output. In one embodiment, actuator movements may be calculated based on a generated model (as described above) to maintain desired output conditions. In the present example, a calculation may indicate that moving valve B by approximately 1/4% may offset adverse effects of moving valve A (e.g., an increase in megawatts) while maintaining the resulting re-lubrication of the ball stem. Such a calculation may consider size, volume, dimensions, and/or other characteristics of valve B, or other actuators in other examples. According to various embodiments, actuators may be moved simultaneously, or at about the same time as other actuators, to produce desired effects.

Process block 118 may include overriding existing controls associated with a power generation unit. Such controls may be implemented by a control system and may operate to undo or reverse actions or effects associated with moving actuators. In one embodiment, models that may include relationships between actuator inputs and respective outputs may be designed to feed forward desired actuator actions without a control system undoing such actions.

Process block 120 may include a control system that has knowledge of which actuators are being fed forward. In one embodiment, the control system may leverage such knowledge in reacting to pertubations or modifications in a power generation unit in the way that the control system may consider actuators that are being fed forward as unavailable for effecting outputs associated with the power generation unit. In this way, actuators that are being fed forward may not be reversed excluded from reversals by a control system, according to one embodiment.

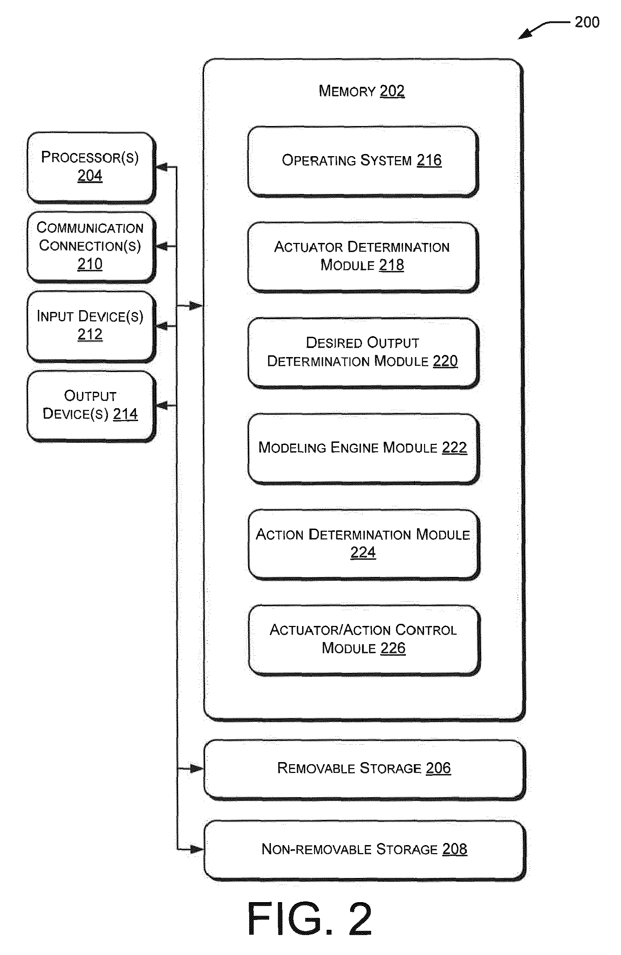

FIG. 2 illustrates an example computing environment 200 for moving actuators in a power generation unit, according to one embodiment of the disclosure. The computing environment 200 may include one or more computing devices, which may include, but are not limited to, a processor 204 capable of communicating with a memory 202. The processor 204 may be implemented as appropriate in hardware, software, firmware, or combinations thereof. Software or firmware implementations of the processor 204 may include computer-executable or machine-executable instructions written in any suitable programming language to perform the various functions described.

A memory 202 may store program instructions that are loadable and executable on the processor 204, as well as data generated during the execution of these programs. Depending on the configuration and type of computing environment 200, a memory 202 may be volatile (such as random access memory (RAM)) and/or non-volatile (such as read-only memory (ROM), flash memory, etc.). In some embodiments, the devices may also include additional removable storage 206 and/or non-removable storage 208 including, but not limited to, magnetic storage, optical disks, and/or tape storage. The disk drives and their associated computer-readable media may provide non-volatile storage of computer-readable instructions, data structures, program modules, and other data for the devices. In some implementations, the memory 202 may include multiple different types of memory, such as static random access memory (SRAM), dynamic random access memory (DRAM), or ROM.

The memory 202, removable storage 206, and non-removable storage 208 are all examples of computer-readable storage media. For example, computer-readable storage media may include volatile and non-volatile, removable and non-removable media implemented in any method or technology for storage of information such as computer-readable instructions, data structures, program modules or other data. Additional types of computer storage media that may be present include, but are not limited to, programmable random access memory (PRAM), SRAM, DRAM, RAM, ROM, electrically erasable programmable read-only memory (EEPROM), flash memory or other memory technology, compact disc read-only memory (CD-ROM), digital versatile discs (DVD) or other optical storage, magnetic cassettes, magnetic tapes, magnetic disk storage or other magnetic storage devices, or any other medium which can be used to store the desired information and which can be accessed by the devices. Combinations of any of the above should also be included within the scope of computer-readable media.

The computing environment 200 may also contain one or more communication connections 210 that allow the devices to communicate with devices or equipment capable of communicating with a computing device. The connections can be established via various data communication channels or ports, such as USB or COM ports to receive connections for cables connecting the devices, e.g., control devices, to various other devices in an IO network. Devices in the IO network 100, e.g., control devices, can include communication drivers such as Ethernet drivers that enable the devices to communicate with other devices on the IO network. According to various embodiments, the connections 210 may be established via a wired and/or wireless connection on the IO network. The computing environment 200 may also include one or more input devices 212, such as a keyboard, mouse, pen, voice input device, and touch input device. It may also include one or more output devices 214, such as a display, printer, and speakers.

In other embodiments, however, computer-readable communication media may include computer-readable instructions, program modules, or other data transmitted within a data signal, such as a carrier wave, or other transmission. As used herein, however, computer-readable storage media does not include computer-readable communication media.

Turning to the contents of the memory 202, the memory 202 may include, but is not limited to, an operating system (OS) 216 and one or more application programs or services for implementing the features and aspects disclosed herein. Such application or services may include, but are not limited to, an actuator determination module 218, a desired output determination module 220, a modeling engine module 222, an action determination module 224, and an actuator/action control module 226.

The actuator determination module 218 may determine one or more actuators to adjust. In one aspect of an embodiment, determining an actuator to adjust may include receiving a request to adjust an actuator. Such a request may be received via a communication module from a device and/or a user inputting a command or similar request to adjust an actuator, according to various embodiments.

In one embodiment, the actuator determination module 218 may perform functions described in association with the step adjustment process 112 in FIG. 1. The actuator to adjust may be determined based on the actuator's relationship (e.g., connection and interoperability) with other actuators that may be associated with certain features or functions in a power generation unit, such as fuel flow, ball stems, etc., which may be included in a model.

The desired output determination module 220 may determine a desired output condition associated with moving one or more actuators. In one embodiment, the desired output determination module 220 may perform functions described in association with the output control process 114 in FIG. 1. As described, each actuator in a power generation unit may have a different effect on each output associated with a power generation unit. A desired output may be determined at least in part by identifying movements for actuators (e.g., inputs) and corresponding outputs, as may be defined in a model that includes the various inputs and outputs associated with a power generation unit.

The modeling engine module 222 may generate a linear input/output model for actuator movements (input) and their associated outputs in a power generation unit. In one embodiment, the modeling engine 222 may generate a model as described in association with the process 110 in FIG. 1. In one embodiment, a generated model may include at least a magnitude and dynamics data for each input/output pair associated with a power generation unit. For example, a model may indicate that moving Input A by about 10% moves Output A by about 3% (i.e., magnitude) with about a three second time constant (dynamics data) and moves Output B by about 20% (magnitude) with about a one second time constant (dynamics data). Numerous other examples of input/output pair movements and results may exist in other embodiments.

The action determination module 224 may determine one or more actuators to adjust to maintain a desired output. In one aspect of an embodiment, the desired output may be a power generation output, such as an amount of watts or an amount of steam production. The action determination module 224 may maintain such a desired output by identifying actuators that may offset adverse impacts that may accompany stepping actuators. As described above, an increase in megawatts associated with about a 1/2% step up of a first electronic gas control valve may be offset by about a 1/4% step down of a second actuator to negate the increase in megawatts while protecting the desired output associated with stepping up the first electronic gas control valve. A model containing inputs and associated outputs may be leveraged to determine that about a 1/4% step down of the second electronic gas control valve may have such an effect when stepped with the first electronic gas control valve, according to the present example. In one embodiment, the action determination module 224 may perform functions described in association with the "determine actions" process 116 in FIG. 1. Numerous other examples involving different actuators, percentages, results, etc., may exist in other embodiments.

The actuator/action control module 226 may perform functions to protect desired outputs associated with stepping moving actuators. One such function may include communicating with a control system to provide one or more actuators that have been fed forward to produce a desired output. In one embodiment, a control system may exclude such actuators from processes that may exist to reverse or undo moving of actuators. Other functions or techniques for overriding control systems that may attempt to reverse or undo desired outputs may exist in other embodiments. In one embodiment, the actuator/action control module 226 may perform functions associated with unit control 118 and reaction provisions 120 described in FIG. 1.

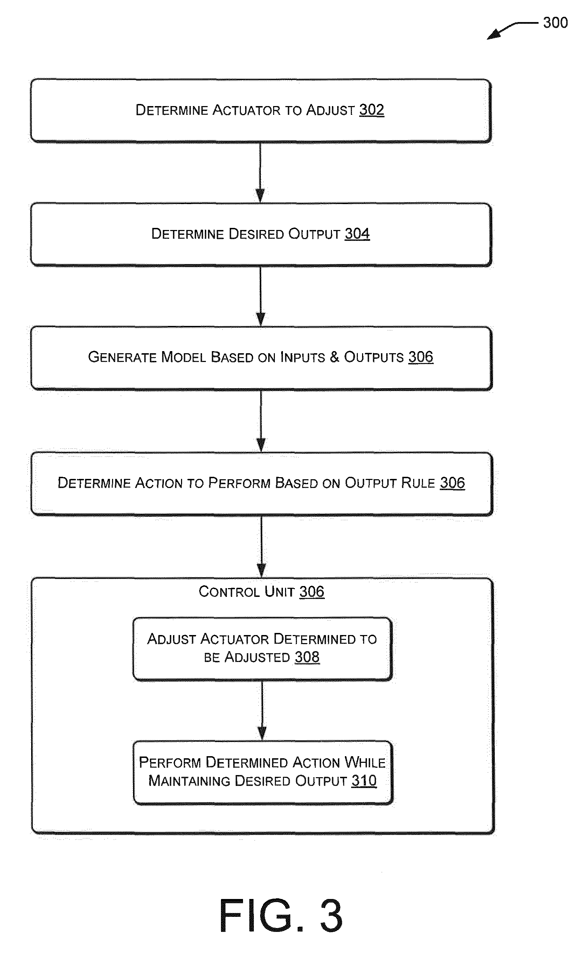

FIG. 3 illustrates an example flow diagram for a method 300 according to one embodiment of the disclosure. The method 300 may begin at block 302, where an actuator to adjust may be determined, e.g., by the actuator determination module 218. Such an actuator may be identified in a model relating inputs associated with various actuator movements to their respective outputs in a power generation unit. A desired output may be determined, e.g., by the desired output determination module 220, at block 304. A desired output may include a result that is desired upon moving one or more actuators. As described above, an example desired output may be re-lubricating a ball stem. Numerous other examples may exist in other embodiments.

At block 306, a model that includes magnitudes and dynamics data associated with moving one or more actuators in a power generation unit and associated outputs may be generated, e.g., by the modeling engine module 222. As described, a model may be generated based on existing knowledge connectivity, interoperability, and other associations between actuators in a power generation unit. The model may be leveraged by other modules and processes described herein to determine actuators to adjust, determine a desired output, calculate actuators to adjust to maintained a desired output, override controls that may be implemented to reverse actions associated with moving actuators, among other functions.

An action to perform based on an output rule, e.g., as defined in the generated model, may be determined, e.g., by the action determination module 224, at block 308. In one embodiment, at least one action to perform of a power generation unit may be determined based at least in part on an output model for the power generation unit. The determined action may include moving an actuator by a certain percentage to offset an adverse impact associated with moving another actuator, e.g., moving a first electronic gas control valve down about 1/4% to offset an increase in megawatts associated with moving a second electronic gas control valve up about 1/2%. Numerous other examples may exist in other embodiments.

A power generation unit may be controlled, at block 310. In one embodiment, controlling the power generation unit may include manipulating the actuator of the unit determined to be adjusted. At block 314, in association with manipulating or adjusting the one or more actuators determined to be adjusted, at least one determined action may be performed on a power generation unit while a desired output is maintained. The at least one determined action may include overriding a control system's predetermined function, e.g., as performed by the actuator/action control module 226, to reverse or undo effects associated with moving one or more determined actuators.

The process 300 is illustrated as logical flow diagrams, in which each operation represents a sequence of operations that can be implemented in hardware, software, or a combination thereof. In the context of software, the operations can represent computer-executable instructions stored on one or more computer-readable storage media that, when executed by one or more processors, perform the recited operations. Generally, computer-executable instructions can include control blocks, routines, programs, objects, components, data structures, and the like that perform particular functions or implement particular abstract data types. The order in which the operations are described is not intended to be construed as a limitation, and any number of the described operations can be combined in any order and/or in parallel to implement the process.

Although embodiments have been described in language specific to structural features and/or methodological acts, it is to be understood that the disclosure is not necessarily limited to the specific features or acts described. Rather, the specific features and acts are disclosed as illustrative forms of implementing the embodiments.

Various aspects and embodiments of the present invention are defined by the following numbered clauses:
1. A system, comprising:
   at least one memory that stores computer-executable instructions;
   at least one processor configured to access the at least one memory, wherein the at least one processor is configured to execute the computer-executable instructions to:
      determine an actuator of a unit to adjust;
      determine a desired output of the unit;
      determine at least one action to perform on the unit based at least in part on an output model for the unit; and
      control the unit by:
         manipulating the actuator of the unit determined to be adjusted; and
         performing the at least one determined action on the unit while maintaining the desired output.
2. The system of clause 1, wherein the determination of the actuator to be adjusted comprises receiving a request to adjust the actuator.
3. The system of any preceding clause, wherein the unit comprises a power generation unit.
4. The system of any preceding clause, wherein the desired output of the unit comprises a power generation output.
5. The system of any preceding clause, wherein the power generation output comprises an amount of watts or an amount of steam production.
6. The system of any preceding clause, wherein the adjustment of the actuator comprises a step adjustment.
7. The system of any preceding clause, wherein the output model is generated based at least in part on at least one input and at least one output of the unit.
8. The system of any preceding clause, wherein the output model comprises at least one of a lookup table, a state-space transfer function, or a filter.
9. The system of claim 1, wherein the output model comprises an instruction that at least one output be impacted while at least one other output not be impacted.
10. A method, comprising:
   determining an actuator of a unit to adjust;
   determining a desired output of the unit;
   determining at least one action to perform on the unit based at least in part on an output model for the unit; and
   controlling the unit by:
      manipulating the actuator of the unit determined to be adjusted; and
      performing the at least one determined action on the unit while maintaining the desired output.
11. The method of any preceding clause, wherein the unit comprises a power generation unit.
12. The method of any preceding clause, wherein the desired output comprises a power generation output.
13. The method of any preceding clause, wherein the power generation output comprises an amount of watts or an amount of steam production.
14. The method of any preceding clause, wherein the adjustment of the actuator comprises a step adjustment.
15. The method of any preceding clause, further comprising generating the output model based at least in part on at least one input and at least one output of the unit.
16. The method of any preceding clause, wherein determining the at least one action to be performed is based at least in part on the output model.
17. The method of any preceding clause, wherein the output model comprises at least one of a lookup table, a state-space transfer function, or a filter.
18. The method of any preceding clause, wherein controlling the unit further comprises maintaining the adjustment of the actuator and the performance of the at least one determined action for a predetermined period of time.
19. The method of any preceding clause, wherein the output model comprises an instruction that at least one output be impacted while at least one other output be maintained.
20. One or more computer-readable media storing computer-executable instructions that, when executed by at least one processor, configure the at least one processor to perform operations comprising:
   generating an input/output model for a turbine unit based at least in part on at least one input and at least one output of turbine unit;
   determining an actuator of the turbine unit to adjust;
   determining at least one action to perform on the turbine unit based at least in part on the input/output model; and
   controlling the turbine unit by:
      manipulating the actuator of the turbine unit determined to be adjusted for a predetermined time; and
      performing the at least one determined action on the turbine unit for the predetermined time while maintaining a desired output of the turbine unit; and
   maintaining the control of the turbine unit while the turbine unit operates under other control for the predetermined time period.

## Claims

1. A method (300), comprising:
determining (302) an actuator of a unit to adjust;
determining (304) a desired output of the unit;
determining (306) at least one action to perform on the unit based at least in part on an output model for the unit; and
controlling the unit by:
manipulating (308) the actuator of the unit determined to be adjusted; and
performing (310) the at least one determined action on the unit while maintaining the desired output.

2. The method of claim 1, wherein the unit comprises a power generation unit.

3. The method of claim 1 or claim 2, wherein the desired output comprises a power generation output.

4. The method of claim 3, wherein the power generation output comprises an amount of watts or an amount of steam production.

5. The method of any preceding claim, wherein the adjustment of the actuator comprises a step adjustment.

6. The method of any preceding claim, further comprising generating the output model based at least in part on at least one input and at least one output of the unit.

7. The method of any preceding claim, wherein determining the at least one action to be performed is based at least in part on the output model.

8. The method of any preceding claim, wherein the output model comprises at least one of a lookup table, a state-space transfer function, or a filter.

9. The method of any preceding claim, wherein controlling the unit further comprises maintaining the adjustment of the actuator and the performance of the at least one determined action for a predetermined period of time.

10. The method of any preceding claim, wherein the output model comprises an instruction that at least one output be impacted while at least one other output be maintained.

11. A system, comprising:
at least one memory (202) is that stores computer-executable instructions;
at least one processor (204) configured to access the at least one memory (202), wherein the at least one processor (204) is configured to execute the computer-executable instructions to perform the method of any preceding claim.

12. One or more computer-readable media storing computer-executable instructions that, when executed by at least one processor (204), configure the at least one processor (204) to perform operations comprising:
generating an input/output model for a turbine unit (104) based at least in part on at least one input and at least one output of turbine unit (104);
determining an actuator of the turbine unit (104) to adjust;
determining at least one action to perform on the turbine unit (104) based at least in part on the input/output model; and
controlling the turbine unit (104) by:
manipulating the actuator of the turbine unit (104) determined to be adjusted for a predetermined time; and
performing the at least one determined action on the turbine unit (104) for the predetermined time while maintaining a desired output of the turbine unit (104); and
maintaining the control of the turbine unit (104) while the turbine unit (104) operates under other control for the predetermined time period.
